# EUROPEAN PATENT SPECIFICATION

(11) **EP 1 365 557 B1**
(45) Date of publication and mention of the grant of the patent: **18.04.2007**
(21) Application number: 03011558.8
(22) Date of filing: 21.05.2003
(51) Int. Cl.: H04L 29/06, H04L 29/12

(54) **Device-sharing system, device administration terminal, gateway terminal, and method for providing a device-sharing service**
System zur gemeinsamen Benutzung von Geräten, Endgerät zum Administrieren von Geräten, Netzübergangseinrichtung, und Verfahren zum gemeinsamen Benutzen von Geräten
Système à dispositif partagé, terminal d'administration du dispositif, terminal de passarelle, et procédé pour fournir un service à un dispositif partagé

(30) Priority: 22.05.2002 JP 2002148242
(43) Date of publication of application: 26.11.2003
(73) Proprietor: SEIKO EPSON CORPORATION, Shinjuku-ku Tokyo 163-0811 (JP)
(72) Inventor: Fukao, Akihito, Suwa-shi, Nagano-ken 392-8502 (JP); Taniguchi, Shinya, Suwa-shi, Nagano-ken 392-8502 (JP); Mokuya, Senichi, Suwa-shi, Nagano-ken 392-8502 (JP); Takahashi, Toru, Suwa-shi, Nagano-ken 392-8502 (JP)
(74) Representative: Hoffmann, Eckart

(56) References cited:
- EP-A- 1 089 162
- EP-A- 1 193 912
- GUTTMAN E ET AL: "Service Location Protocol, Version 2" RFC 2608, June 1999 (1999-06), XP002191158 Retrieved from the Internet: <URL:www.ietf.org> [retrieved on 2002-02-22]

## Description

### BACKGROUND OF THE INVENTION

### 1. Field of the Invention

The present invention relates to a system for sharing devices and a terminal, device, programs, and methods adapted for that system, and relates more specifically to a device-sharing system useful for sharing devices, a device administration terminal, a gateway terminal, a device, a program for the terminal and a program for the device, and a method for providing a device-sharing service.

### 2. Description of Related Art

It is expected that home gateways in each home for connecting to the Internet will be common in the very near future. These home gateways will be connected directly to the Internet and have multiple ports for connecting multiple network devices to the gateway so that each network device can access Internet services through the home gateway. Typical of such network devices are network-enabled scanners and printers.

Such networks will enable network devices in the home to access Internet servers as well as network devices in other homes. An example of the latter is a case in which home A has a network-enabled scanner connected as a network device to the gateway, home B has a network printer as the network device connected to the gateway, and a user in home A wants to send a document by fax to home B. To send the fax the user scans the document with the network scanner in home A, and the network scanner then sends the document through the gateways in homes A and B to the network printer in home B.

In order to use a network device in another home, however, the address assigned to the destination home gateway must first be acquired to enable communication. This makes it necessary to either install a special application or set special network settings in the home gateway or network device. Both of these can be complicated for non-technical users.

Furthermore, even if some other technology is used to make the network settings or software installation easier, the network devices in one home are not necessarily able to use all other network devices, and each other network device must be individually queried to determine whether the other device can be used in order to expand the range of usable devices. Expanding the range of usable network devices can therefore be time-consuming and difficult.

Furthermore, even if it is possible to automatically query other network devices to determine their usability, it is still difficult to query unknown network devices. This limits how far the range of usable devices can be expanded.

The document XP002191158 describes a service location protocol for providing hosts with access to information about the existence, location and configuration of networked services. This protocol eliminates the need for a user to know the name of a network host supporting a service. Rather, the user supplies the desired type of service and a set of attributes which describe the service. Based on that description, the service location protocol resolves the network address of the service for the user.

EP 1 193 912 A2 discloses a method for providing services in an IP-based network system to control a plurality of devices connected to one another within the network. The method includes the steps of (a) accessing a service lookup device that notifies services provided by the devices within the network, (b) displaying information on the devices connected to the network, (c) displaying a list of services provided by a device selected from the displayed devices, and (d) performing an operation according to a service selected from the displayed list of services. Accordingly, a user can be provided with services by the devices within the network either through a user interface or through a command. In this prior art, a service client that requires a certain service, receives a list of existing service servers, selects a service server and the desired service and communicates with the service server. Virtually, this prior art is comparable to the foregoing one in that the selection process is to provide the network address of the service server to the service client to allow the latter to communicate with the former.

### SUMMARY OF THE INVENTION

It is an object of the present invention to provide a device-sharing system useful for sharing devices, a device administration terminal, a device, a program for the terminal and a program for the device, and a method for providing a device-sharing service.

This object is achieved by a device-sharing system as claimed in claim 1, an administration terminal as claimed in claim 6, a method as claimed in claim 8 and a program for execution by a computer to implement the administration terminal and another program for implementing a service device. Preferred embodiments of the invention are subject-matter of the dependent claims.

When the device administration terminal receives a provide-service request it identifies as service-related devices based on service information from the service information storage means the device that sent the provide-service request and a device linked thereto to provide the service, reads service information for the service-related devices from the service information storage means, and sends the read service information to the request-originating device.

The device sends the provide-service request to the device administration terminal and upon receiving service information in response to the request displays a service list based on the received service information. When a service is selected from the displayed service list, the device communicates with the service-related device based on device-to-device communication information contained in the received service information for the selected service.

The device (service unit) sends the provide-service request to the device administration terminal.

When the device administration terminal receives a request it identifies, based on service information from the service information storage means, the device that sent the provide-service request and a device linked thereto to provide the service as service-related devices. It then reads service information for the service-related devices from the service information storage means, and sends the read service information to the request-originating device.

When the device then receives the service information, it displays a service list based on the received service information. When a service is then selected from the displayed service list, the device communicates with the linked service device based on device-to-device communication information contained in the received service information for the selected service.

The request-originating device and the service-related device refer to the device requesting a service and the other device linked thereto to provide, from among plural available services, a service that uses the device that sent the provide-service request. This also applies to the device administration terminal, the terminal program, and the method of providing a device-sharing service.

Furthermore, the service information storage means could be disposed to the device or device administration terminal, but the invention shall not be so limited and the service information storage means could be provided to a terminal other than the device and device administration terminal. Examples of such other terminals include a database server and network storage devices. This also applies to the device administration terminal, the terminal program, and the method for providing a device-sharing service.

The device administration terminal is any communication device connected to one end of a communication path to the device and having at least a server function. The device administration terminal could also have both a client function and a server function.

Other objects and attainments together with a fuller understanding of the invention will become apparent and appreciated by referring to the following description and claims taken in conjunction with the accompanying drawings.

### BRIEF DESCRIPTION OF THE DRAWINGS

- Fig. 1: is a schematic block diagram of a network system to which the present invention is applied;
- Fig. 2: is a block diagram showing the configuration of the device management server 100;
- Fig. 3: is a table showing the data structure of the user information database 40;
- Fig. 4: is a table showing the data structure of the device information database 41;
- Fig. 5: is a table showing the device-sharing of the service information database 42;
- Fig. 6: is a table showing the data structure of the group information database 43;
- Fig. 7: is a flow chart showing the user information registration process;
- Fig. 8: is a flow chart showing the device information registration process;
- Fig. 9: is a flow chart showing the service information registration process;
- Fig. 10: is a flow chart showing the group information registration process;
- Fig. 11: is a flow chart showing the join-group process;
- Fig. 12: is a flow chart showing the first service-information-providing process;
- Fig. 13: is a flow chart showing the second service-information-providing process;
- Fig. 14: is a block diagram showing the configuration of a home gateway 200;
- Fig. 15: is a flow chart showing the user information registration request process;
- Fig. 16: is a flow chart showing the device information registration request process;
- Fig. 17: is a flow chart showing the service information registration request process;
- Fig. 18: is a flow chart showing the group information registration request process;
- Fig. 19: is a flow chart showing the join-group request process;
- Fig. 20: is a flow chart showing the first service-providing process;
- Fig. 21: is a flow chart showing the second service-providing process.

### DESCRIPTION OF THE PREFERRED EMBODIMENTS

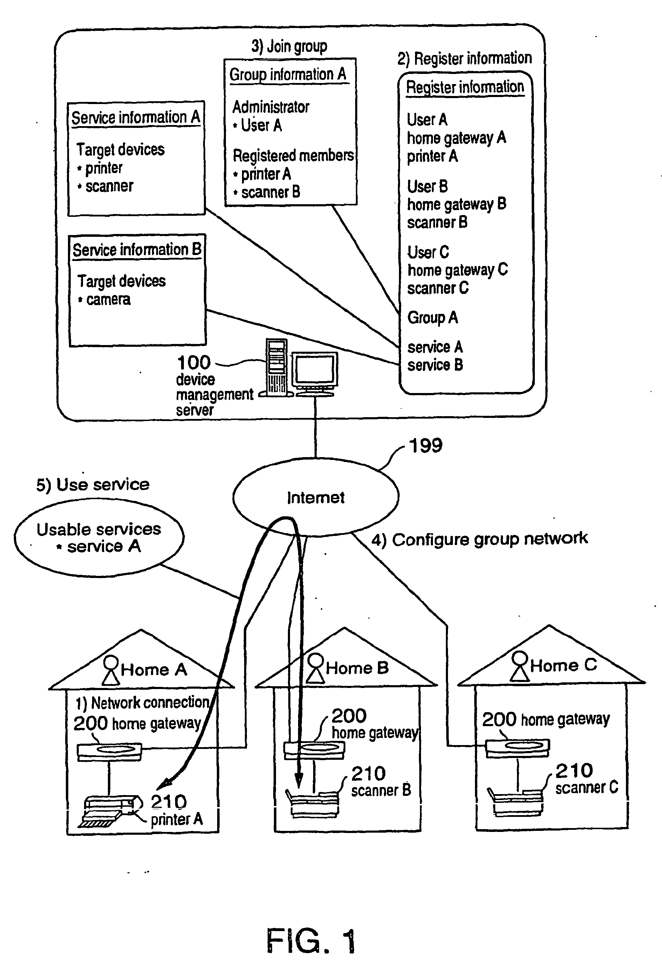

Preferred embodiments of the present invention are described below with reference to the accompanying figures. Fig. 1 to Fig. 21 show various embodiments of the a device-sharing system, a device administration terminal, a gateway terminal, a device, a program for the terminal and a program for the device, and a method for providing a device-sharing service according to the present invention.

As shown in Fig. 1, a device-sharing system, a device administration terminal, a gateway terminal, a device, a program for the terminal and a program for the device, and a method for providing a device-sharing service according to the present invention are employed to define multiple services achieved by linking at least two of multiple network devices 210 located in individual homes A, B, and C, to communicatively connect the necessary network devices 210 according to a provide-service request, and to provide services using these network devices 210.

First, the configuration of a network system for deploying the present invention is described with reference to Fig. 1. Fig. 1 is a schematic block diagram of a network system to which the present invention is applied.

As shown in Fig. 1 a home gateway 200 and at least two network devices 210 connected to each home gateway 200 are located in homes A and B. Examples of these network devices 210 are a network-enabled scanner and printer. In the example shown in Fig. 1 a network-enabled printer is located in home A, and a network-enabled scanner is installed in both home B and home C as the network devices 210.

A device management server 100 for managing the network devices 210 and each of the home gateways 200 are connected to the Internet 199.

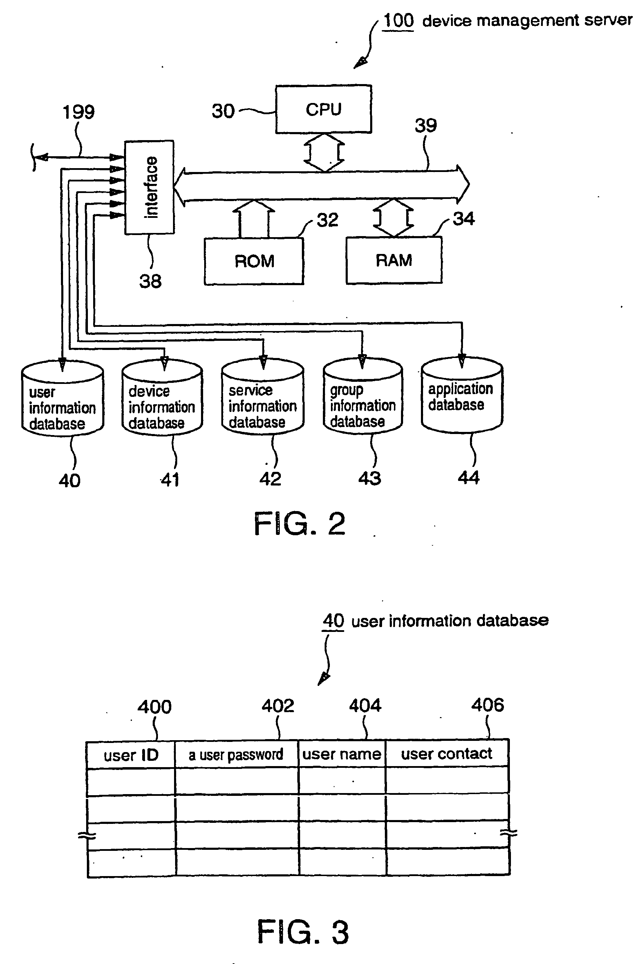

The configuration of the device management server 100 is described in detail next with reference to Fig. 2. Fig. 2 is a block diagram showing the configuration of the device management server 100.

As shown in Fig. 2 the device management server 100 is composed of a CPU 30 for controlling the entire operations and the system based on a control program, ROM 32 for storing the control program for CPU 30 at a predetermined address, RAM 34 for storing data read from ROM 32 and the required results of operations performed by CPU 30, and an interface 38 for exchanging data with external devices. The components of the device management server 100 are connected to a common data bus 39 for transferring data therebetween.

Connected to the interface 38 are a user information database 40 for storing user information about the users, a device information database 41 for storing device information relating to the network devices 210, a service information database 42 for storing service information relating to available services, a group information database 43 for storing group information relating to the groups to which a plurality of users or network devices 210 belong, an application database 44 for storing applications applicable to the home gateway 200, and a communication path for connecting to the internet 199.

The data structure of the user information database 40 is described in detail next with reference to Fig. 3. Fig. 3 is a table showing the data structure of the user information database 40.

The user information database 40 stores user information relating to the users. A user could be the owner of a home gateway 200 or network device 210, or another service vendor. The user information database 40 stores one record per user as represented by the lines in Fig. 3. Each record contains the following fields shown as columns in Fig. 3: a user ID field 400 for storing a unique user ID, a user password field 402, user name field 404, and user contact field 406.

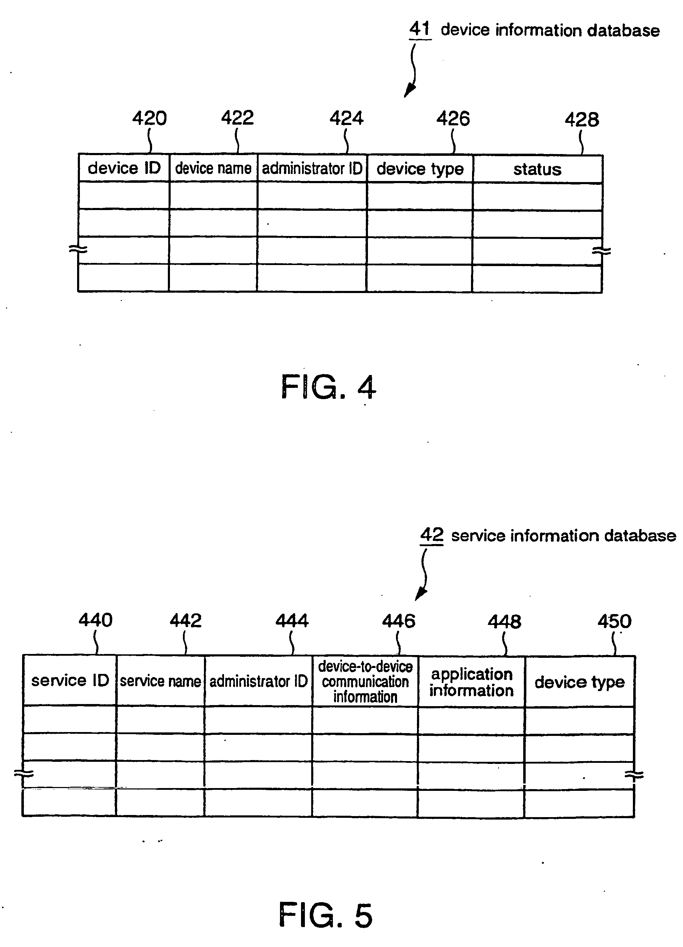

The data structure of the device information database 41 is described in detail next with reference to Fig. 4. Fig. 4 is a table showing the data structure of the device information database 41.

As shown in Fig. 4 the device information database 41 similarly stores one record per network device 210. Each record has the following fields: device ID field 420 storing a unique ID for each network device 210, a name field 422 for network device 210, an administrator ID field 424 identifying the user that is the administrator for the network device 210, a device type field 426 for storing the type of network device 210, and a status field 428 for storing the status of the network device 210.

The information stored to fields 422, 426, and 428 is acquired from the network device 210 by means of communication with the network device 210.

The data structure of the service information database 42 is described in detail next with reference to Fig. 5 which is a table showing the device-sharing of the service information database 42.

As shown in Fig. 5 the service information database 42 stores one record per service. Each record has the following fields: a service ID field 440 for storing a unique ID identifying the particular service, a service name field 442, administrator ID field 444 identifying the user that is the service administrator, a device-to-device communication information field 446 storing information enabling communication between network devices 210 used for the service, an application information field 448 storing the location from which the application can be acquired, and device type field 450 for storing the type of network device 210.

The global IP address, for example, assigned to the home gateway 200 to which the network device 210 used in the service is connected is stored as the device-to-device communication information in field 446.

The URL (Universal Resource Locator) of the Web server where the application is stored is stored as the application information in field 448, for example. In the embodiment, the address of the device management server 100 is set. It is not essential that application information is stored, and it could be stored only when a special application is needed on the home gateway 200 side to provide the service.

Services as defined in this embodiment of the invention are achieved by linking at least two network devices 210. Multiple network devices 210 used for the service are defined for each service, and device-to-device communication information enabling the defined network devices 210 to talk with each other is defined. To provide the service, these network devices 210 are communicatively connected to link the network devices 210 together and thereby achieve some particular function. The device-to-device communication information is required to communicatively connect the network devices 210. In other words, one network device 210 used in the service communicates with another network device 210 used for the same service based on the device-to-device communication information.

An example of this service is a fax service achieved by linking a network scanner and a network printer.

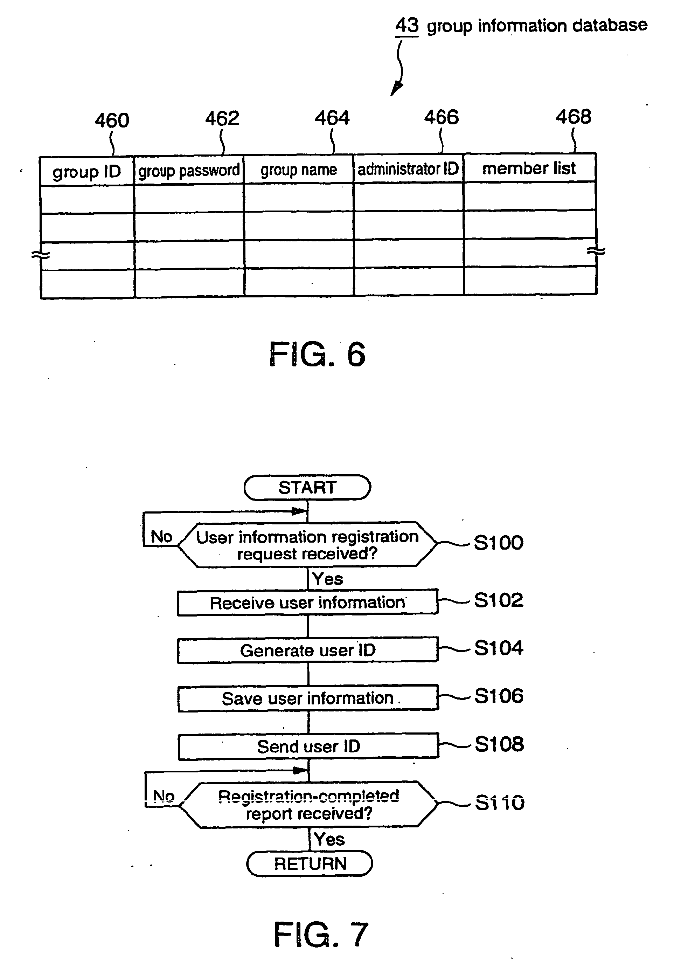

The data structure of the group information database 43 is described next in detail with reference to Fig. 6. Fig. 6 is a table showing the data structure of the group information database 43.

The group information database 43 also stores one record per group as shown in Fig. 6. Each record has the following fields: a group ID field 460 for storing a group ID uniquely identifying the group, a group password field 462, group name field 464, administrator ID field 466 storing the user ID of the user that is the group administrator, and a member list field 468 storing all members of the group.

The user ID of each user belonging to the group, or the device ID of each network device 210 associated with the group, is stored as a member list in the member list field 468. It should be noted that one or multiple user IDs or device IDs could be stored to the member list field 468.

Referring again to Fig. 2, the CPU 30 is a microprocessing unit (MPU) that starts a specific program stored to a specific address in ROM 32 to execute on a time-share basis according to this program processes such as shown in the flow charts in Fig. 7 to Fig. 13. More specifically, these processes are a user information registration process, a device information registration process, a service information registration process, a group information registration process, a join-group process, a first service-information-providing process, and a second service-information-providing process.

These processes are described next below starting with the user information registration process shown Fig. 7. Fig. 7 is a flow chart showing the user information registration process.

The user information registration process stores user information to the user information database 40 at a user information registration request from the home gateway 200. When the user information registration process is called by the CPU 30 it starts from step S100 as shown in Fig. 7.

Whether a user information registration request was received is first determined in step S100. If it was (yes), control goes to step S102. Otherwise (no), the process waits at step S100 until a registration request is received.

The user information (except for the user ID) is then received in step S102 and a unique user ID that does not duplicate any other user ID is generated in step S104. The user information including both the received user information and the generated user ID is then stored as one user information record in the user information database 40 in step S106. The generated user ID is then sent to the home gateway 200 of the requesting terminal in step S108, and control goes to step S110.

Whether a registration-completed report, indicating that storing the user information was completed normally, was received is determined in step S110. If it was (yes), the user information registration process ends and control returns to the previous process. If it was not received (no), step S110 repeats until the registration-completed report is received.

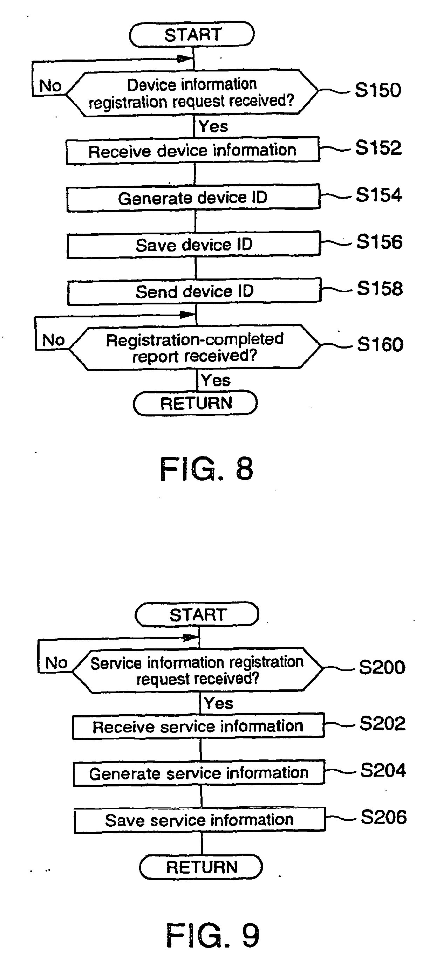

The device information registration process is described in detail next with reference to Fig. 8. Fig. 8 is a flow chart showing the device information registration process.

The device information registration process is for registering device information to the device information database 41 in response to a registration request from the home gateway 200. This process starts from step S150 as shown in Fig. 8 when it is called by the CPU 30.

Whether a device information registration request was received is first determined in step S150. If the registration request was received (yes) control goes to step S152. but otherwise (no) step S150 repeats until the registration request is received.

In step S152 the device information (except for the device ID) is received and a unique device ID that does not duplicate any other device ID is then generated in step S154. The received device information and the generated device ID are then stored as one device information record in the device information database 41 (step S156) and the generated device ID is sent to the home gateway 200 of the requesting terminal in step S158. Control then goes to step S160.

Whether a registration-completed report, indicating that storing the device information was successfully completed, was received is then detected in step S160. If the registration-completed report was received (yes), the device information registration process ends and control returns to the previous process. If the report was not received (no), step S160 repeats until the registration-completed report is received.

The service information registration process is described in detail next below with reference to Fig. 9. Fig. 9 is a flow chart showing the service information registration process.

The service information registration process is a process for storing service information in the service information database 42 in response to a registration request from the home gateway 200. When the process is run by the CPU 30 it starts from step S200 as shown in Fig. 9.

Whether a service information registration request was received is first determined in step S200. If it was (yes), control goes to step S202. Otherwise (no), step S200 repeats until a registration request is received.

In step S202 the service information (not including the service ID) is received and a unique service ID not duplicating any other service ID is then generated in step S204. The received service information and generated service ID are then stored as one service information record to the service information database 42 in step S206, the process ends and control returns to the previous process.

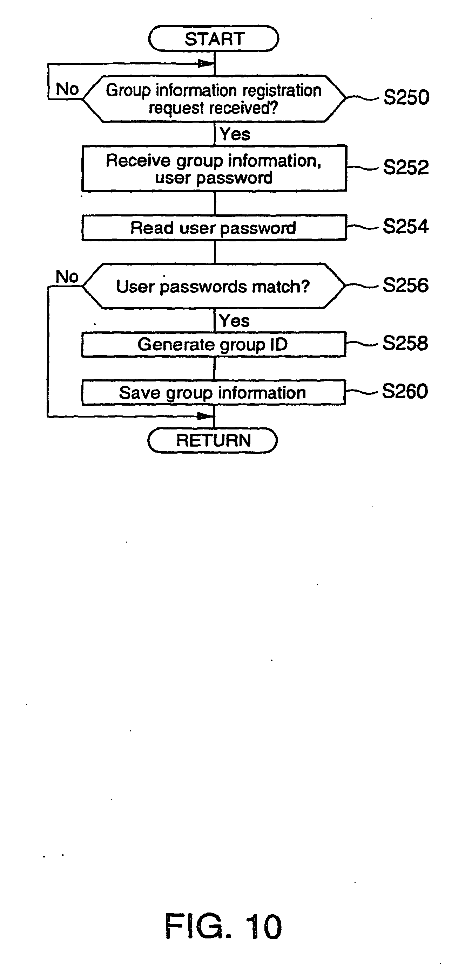

The group information registration process is described in detail next with reference to Fig. 10. Fig. 10 is a flow chart showing the group information registration process.

The group information registration process is a process for storing the group information in the group information database 43 in response to a registration request from the home gateway 200. When the process is run by the CPU 30 it starts from step S250 as shown In Fig. 10.

Whether the group information registration request was received is first determined In step S250. If it was (yes), control goes to step S252, but otherwise (no) step S250 repeats until the registration request is received.

The group information (not including the group ID) and user password are then received in step S252, and the user password corresponding to the administrator user ID contained in the received group information is read from the user information database 40 in step S254. Control then goes to step S256.

In step S256 the received user password is compared with the user password read from the database. If the passwords are the same (step S256 returns yes), a unique group ID that does not duplicate any other group ID is generated In step S258. The received group information and generated group ID are then stored as one group information record to the group information database 43 in step S260, the registration process ends, and control returns to the previous process.

However, if the received password and the user password read from the database do not match in step S256 (no), the process ends and control returns to the previous process.

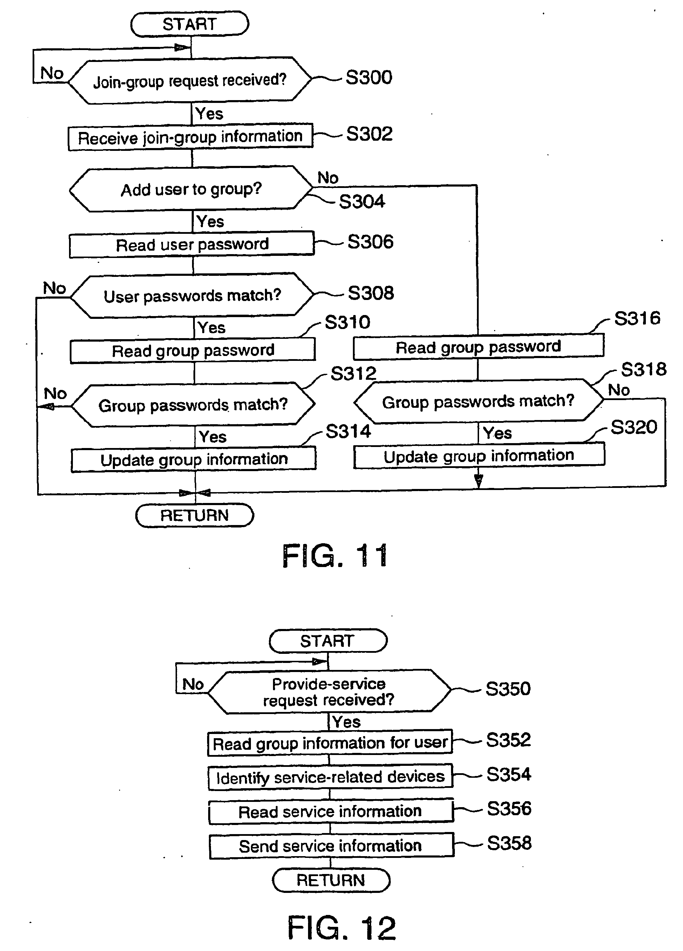

The join-group process is described next in detail with reference to Fig. 11. Fig. 11 is a flow chart showing the join-group process.

The join-group process enables a user or network device 210 to join a group according to a join-group request from the home gateway 200. When the process is run by the CPU 30 it starts from step S300 as shown in Fig. 11.

Whether a join-group request was received is determined in step S300. If it was (step S300 returns yes), control goes to step S302, but otherwise (no) step S300 repeats until a join-group request is received.

Join-group information including at least a group name and group password is received in step S302. Whether a user ID or a device ID is contained in the received join-group information is then determined in step S304. If a user ID was contained in the join-group information (step S304 returns yes), control goes to step S306.

The user password corresponding to the user ID contained in the join-group information is then read from the user information database 40 in step S306. Whether the user password in the join-group information matches the user password read from the user information database 40 is then determined in step S308. If the passwords match (step S308 returns yes), control goes to step S310.

The group password corresponding to the group name in the join-group information is then read from the group information database 43 in step S310. Whether the group password in the join-group information matches the group password read from the database is then checked in step S312. If these group passwords match (step S312 returns yes), the group information in the group information database 43 is updated by writing the user ID in the join-group information to the member list of the corresponding group information record in step S314. The process then ends and control returns to the previous process.

If the group password contained in the join-group information and the group password read from the database are determined in step S312 not to match (step S312 returns no), the process ends and control returns to the previous process.

Furthermore, if the user password contained in the join-group information and the user password read from the database are determined in step S308 not to match (step S308 returns no), the process ends and control returns to the previous process.

Furthermore, if it is determined in step S304 that a device ID is contained in the join-group information(step S304 returns no), control goes to step S316, the group password corresponding to the group name contained in the join-group information is read from the group information database 43, and control then goes to step S318.

Whether the group password contained in the join-group information and the group password read from the database match is then determined in step S318. If the group passwords match (step S318 returns yes), control goes to step S320. The group information in the group information database 43 is then updated by writing the device ID contained in the join-group information to the member list of the corresponding group information record. The process ends and control returns to the previous process.

If in step S318 the group password in the join-group information does not match the group password read from the database (step S318 returns no), the process ends and control returns to the previous process.

The first service-information-providing process is described in detail next with reference to Fig. 12. Fig. 12 is a flow chart showing the first service-information-providing process.

In response to a request from a home gateway 200, the first service-information-providing process provides service information from the service information database 42 to the requesting home gateway 200. When the process is run by the CPU 30 it starts from step S350 as shown in fig. 12.

Whether a provide-service request was received is determined in step S350. If a request was received (yes), control goes to step S352. but otherwise (no) step S350 repeats until a request is received.

The group information for the group to which the user of home gateway 200 that sent the provide-service request belongs is then read from the group information database 43 in step S352. A network device 210 connected to home gateway 200 and a network device 210 linked thereto to provide the service are identified from among the network devices 210 belonging to users in the same group based on the read group information and the service information in the service information database 42 as service-related devices in step S354, and control then goes to step S356.

The service information for the service-related devices is then read from the service information database 42 in step S356. Control then goes to step S358 whereby the read service information is sent to the home gateway 200 from which the request was received. The process then ends and control returns to the previous process.

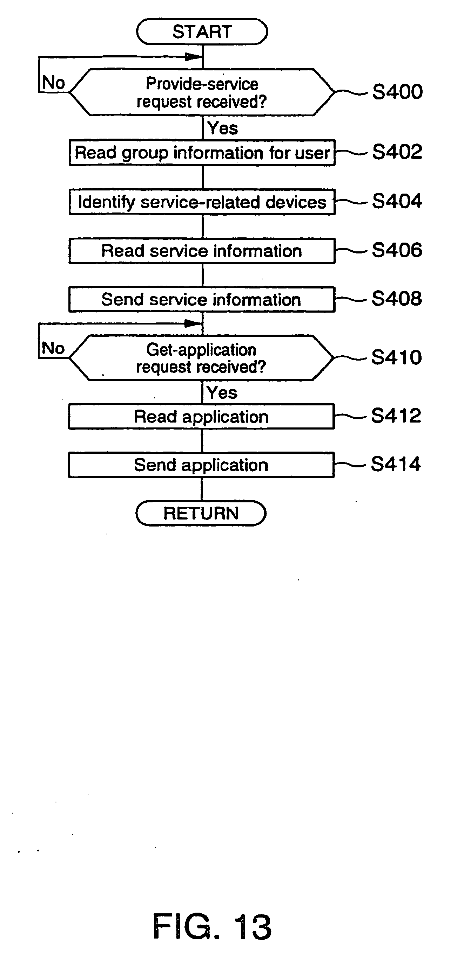

Next, the second service-information-providing process is described in detail with reference to Fig. 13. Fig. 13 is a flow chart showing the second service-information-providing process.

In response to a request from a home gateway 200, the second service-information-providing process provides service information from the service information database 42 to the requesting home gateway 200. When the process is run by the CPU 30 it starts from step S400 as shown in Fig. 13. It should be noted that this second service-information-providing process differs from the first service-information-providing process in that it sends an application to the home gateway 200.

Whether a provide-service request was received is determined in step S400. If a request was received (yes), control goes to step S402, but otherwise (no) step S400 repeats until a request is received.

The group information for the group to which the user of home gateway 200 that sent the provide-service request belongs is then read from the group information database 43 in step S402. A network device 210 connected to home gateway 200 and a network device 210 linked thereto to provide the service are identified from among the network devices 210 belonging to users in the same group based on the read group information and the service information in the service information database 42 as service-related devices, and control then goes to step S406.

The service information for the service-related devices is then read from the service information database 42 in step S406. Control then goes to step S408 whereby the read service information is sent to the home gateway 200 from which the request was received. The process ends then goes to step S410.

Whether a get-application request was received is then determined in step S410. If a get-application request was received (step S410 returns yes), control goes to step S412, but otherwise (no) step S410 repeats until a get-application request is received.

In step S412 the application identified by the get-application request is read from the application database 44, and the retrieved application is then sent to the home gateway 200 from which the request was received in step S414. The process then ends and control returns to the previous process.

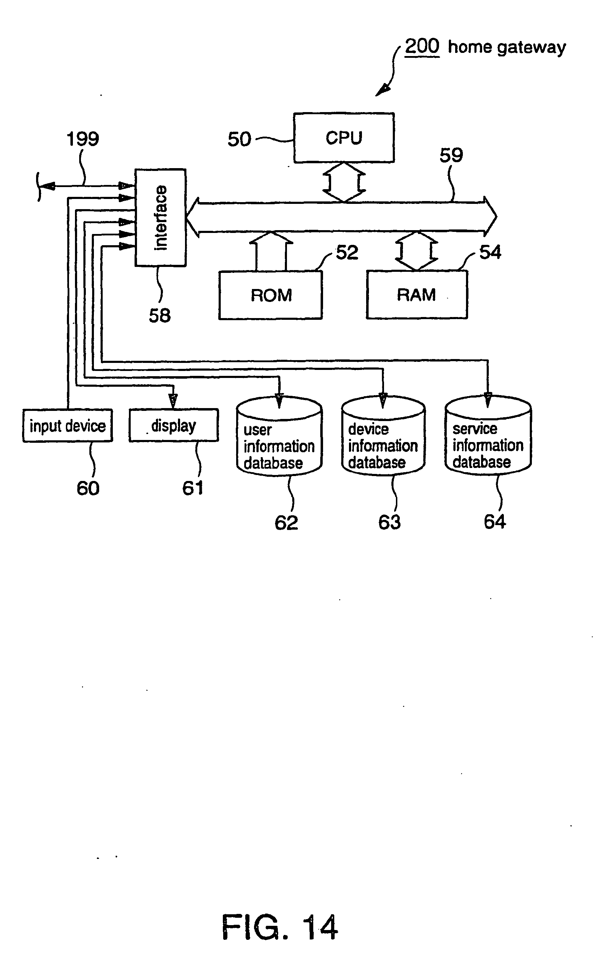

The configuration of the home gateway 200 is described in detail next below with reference to Fig. 14. Fig. 14 is a block diagram showing the configuration of a home gateway 200.

As shown in Fig. 14 this home gateway 200 has a CPU 50 for performing operations and controlling the overall system based on a specific control program, ROM 52 for storing the control program run by the CPU 50 at a specific memory address, RAM 54 for storing data read from ROM 52 and the results of operations required for the operation of the CPU 50, and an interface 58 enabling the exchange of data with external devices. These components are connected to a common data bus 59 for transferring data therebetween.

Connected to the interface 58 are an input device 60 such as a keyboard or mouse as the human interface for entering data, a display 61 for displaying information based on an applied image signal, a user information database 62 for storing user information, a device information database 63 for storing device information, a service information database 64 for storing service information, and a communication path for connecting to the Internet 199.

It should be noted that the data structures used in the user information database 62, device information database 63, and service information database 64 are the same as the user information database 40, device information database 41, and service information database 42 described above.

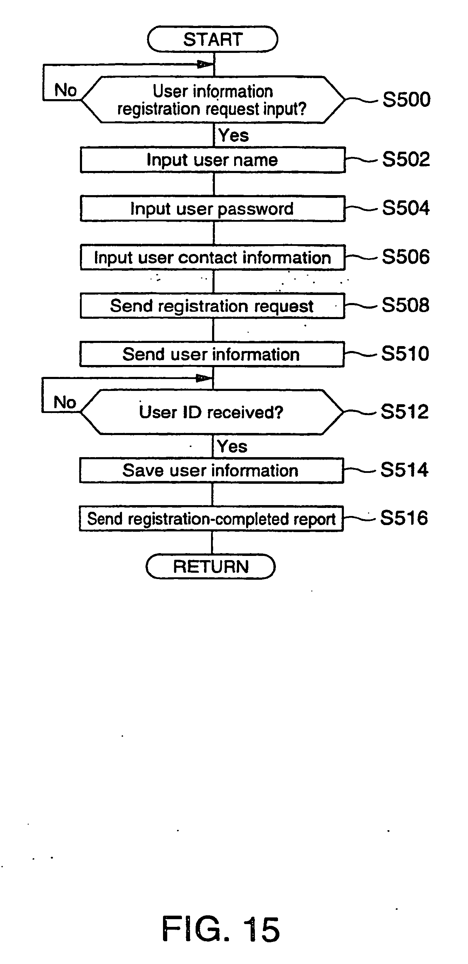

The CPU 50 is a microprocessing unit (MPU) that starts a specific program stored to a specific address in ROM 52 to execute on a time-share basis according to this program processes such as shown in the flow charts in Fig. 15 to Fig. 21. More specifically, these processes are a user information registration request process, a device information registration request process, a service information registration request process, a group information registration request process, a join-group request process, a first service-providing process, and a second service-providing process.

The user information registration request process is described first below with reference to Fig. 15. Fig. 15 is a flow chart showing the user information registration request process.

The user information registration request process corresponds to the user information registration process shown in Fig. 7. When this process is run by the CPU 50, it starts from step S500 as shown in Fig. 15.

Whether a user information registration request was input from the input device 60 is first determined in step S500. If a registration request was input (step S500 returns yes), control goes to step S502, but otherwise (no) step S500 repeats until a registration request is detected.

A user name is then input from the input device 60 in step S502, the user password is input from the input device 60 in step S504, and user contact information is input from the input device 60 in step S506. Control then goes to step S508.

The user information registration request is sent to the device management server 100 in step S508, and the user information input in steps S502 to S506 is sent to the device management server 100 in step S510. Control then goes to step 512.

Then in step S512 it is determined whether the user ID was received. If the user ID was received (step S512 returns yes), control goes to step S514, but otherwise (no) step S512 repeats until the user ID is received.

The received user ID and the user information input in steps S502 to S506 is then registered as one user information record to the user information database 62. A registration-completed report indicating that storing the user information was successfully completed is then sent to the device management server 100 in step S516, the process ends and control returns to the previous process.

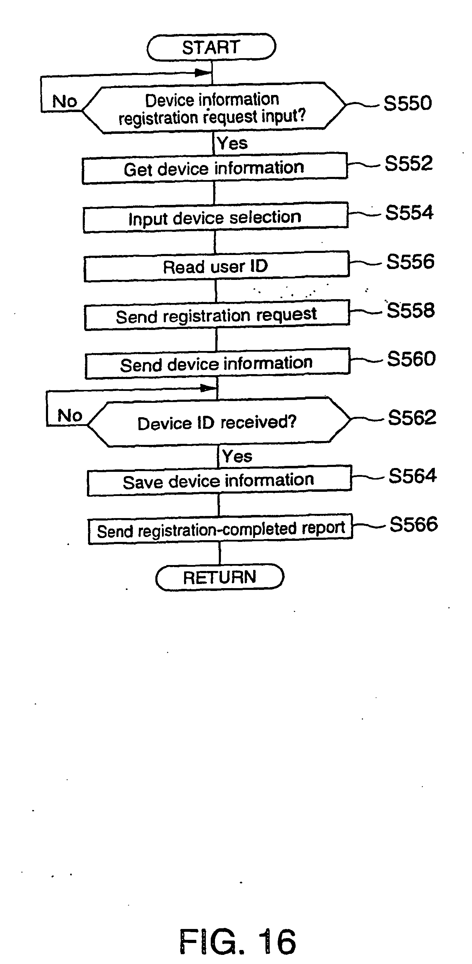

The device information registration request process is described in detail next with reference to Fig. 16. Fig. 16 is a flow chart showing the device information registration request process.

The device information registration request process corresponds to the device information registration process shown in Fig. 8. When this process is run by the CPU 50, it starts from step S550 as shown in Fig. 16.

Whether a device information registration request was input from the input device 60 is determined in step S550. If a registration request was input (step S550 returns yes), control goes to step S552 but otherwise (no) step S550 repeats until a registration request is input.

In step S552 the device information is acquired from network device 210 by communication with the network device 210 connected to the home gateway 200. More specifically, the name, type, and status of the network device 210 are acquired as the device information in step S552.

Next, in step S554, the user is requested to select the network device 210 that is to be registered from among the network devices 210 connected to the home gateway 200. The network device 210 selection is then input from the input device 60 and control goes to step S556.

The user ID is then read from the user information database 62 in step S556 and the read user ID is acquired as the administrator ID. A device information registration request is then sent to the device management server 100 in step S558, the device information acquired in steps S552 and S556 is sent to the device management server 100 in step S560, and control goes to step S562.

Whether the device ID was received is then determined in step S562. If it was (yes), control goes to step S564, but if not (no) step S562 repeats until the device ID is received.

In step S564 the received device ID and the device information acquired in steps S552 and S556 are saved as one device ID record to the device information database 63. A registration-completed report indicating that the device information was successfully registered is then sent to the device management server 100 in step S566. The process then ends and control returns to the previous process.

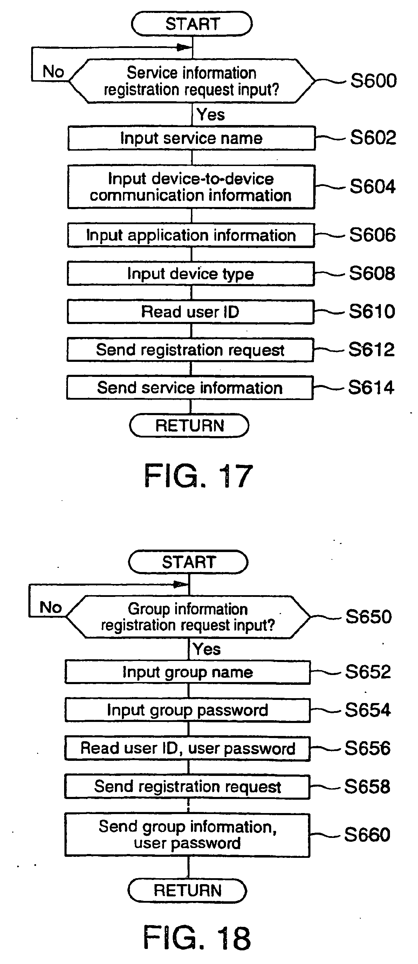

The service information registration request process is described in detail next with reference to Fig. 17. Fig. 17 is a flow chart showing the service information registration request process.

The service information registration request process corresponds to the service information registration process shown in Fig. 9. When this process is run by the CPU 50, it starts from step S600 as shown in Fig. 17.

Whether a service information registration request was input from the input device 60 is determined in step S600. If a registration request was input (yes), control goes to step S602 but otherwise (no) step S600 repeats until a registration request is input.

The service name is then input from the input device 60 in step S602 and control goes to step S604. The device-to-device communication information is then input from the input device 60, the application information is input from the input device 60 in step S606, and the type of network device 210 used in the service is input from the input device 60 in step S608. Control then goes to step S610.

The user ID is then read from the user information database 62 in step S610 and acquired as the administrator ID. A service information registration request is then sent to the device management server 100 in step S612, and the service information input in steps S602 to S610 is sent to the device management server 100. The process then ends and control returns to the previous process.

The group information registration request process is described in detail next with reference to Fig. 18. Fig. 18 is a flow chart showing the group information registration request process.

The group information registration request process corresponds to the group information registration process shown in Fig. 10. When this process is run by the CPU 50, it starts from step S650 as shown in Fig. 18.

Whether a group information registration request was input from the input device 60 is determined in step S650. If a registration request was input (yes), control goes to step S652 but otherwise (no) step S650 repeats until the registration request is input.

In step S652 the group name is input from the input device 60, the group password is input from the input device 60 in step S654, and the user ID and group password are read from the user information database 62 in step S656. The read user ID is acquired as the administrator ID and control goes to step S658.

A group information registration request is then sent to the device management server 100 in step S658, and in step S660 the group information input in steps S652 to S656 and the user password read in step S656 are sent to the device management server 100. The process then ends and control returns to the previous process.

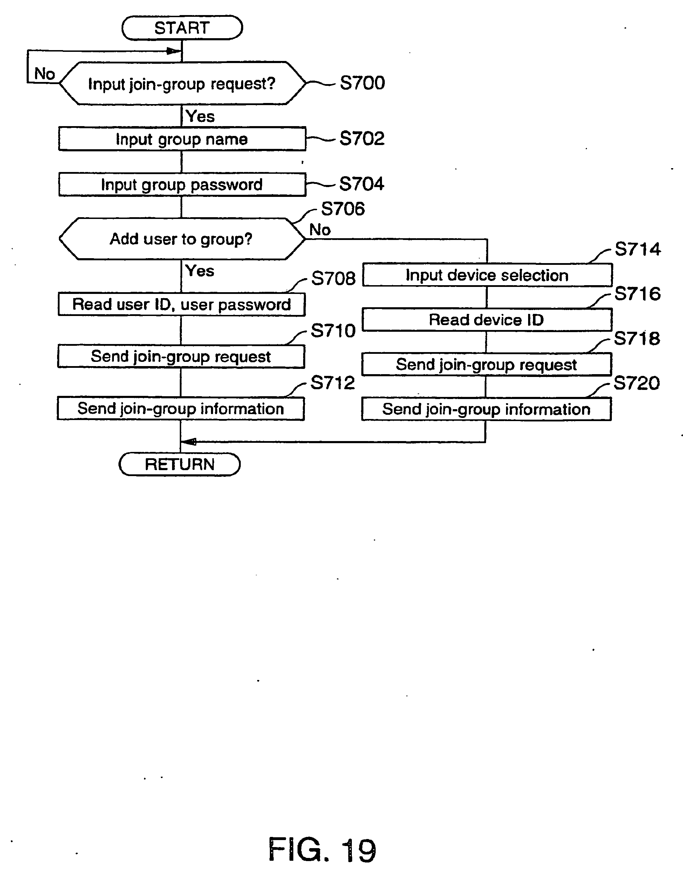

The join-group request process is described in detail next with reference to Fig. 19. Fig. 19 is a flow chart showing the join-group request process.

The join-group request process corresponds to the join-group process shown in Fig. 11. When this process is run by the CPU 50, it starts from step S700 as shown in Fig. 19.

Whether a join-group request was input from the input device 60 is determined in step S700. If a join-group request was input (yes), control goes to step S702 but otherwise (no) step S700 repeats until a join-group request is input.

The group name is then input from the input device 60 in step S702, the group password is input from the input device 60 in step S704, and control goes to step S706.

Based on command input from the user, whether a user joins the group or a network device 210 joins the group is determined in step S706. If it is determined that a user joins the group(yes), the user ID and user password are then read from the user information database 62 in step S708. and control then goes to step S710.

The join-group request is then sent to the device management server 100 in step S710, and the group name, group password, user ID, and user password acquired in steps S702. S704, and S708 are sent to the device management server 100 as the join-group information In step S712. The process then ends and control returns to the previous process.

If step S706 determines that a network device 210 is to participate in the group (step S706 returns no), control goes to step S714 and the user is requested to select the network device 210 connected to the home gateway 200 that is to participate in the group. The network device 210 selection is then input from input device 60, the device ID of the selected network device 210 is read from the device information database 63, and control goes to step S718.

In step S718 the join-group request is sent to the device management server 100. The group name, group password, and device ID input in steps S702. S704, and S716 are then sent to the device management server 100 as the join-group information in step S720. The process then ends and control returns to the previous process.

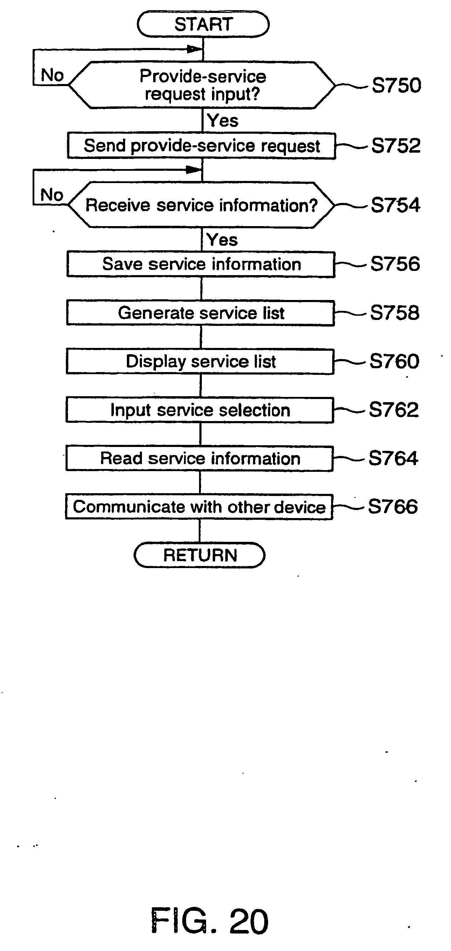

The first service-providing process is described in detail next with reference to Fig. 20. Fig. 20 is a flow chart showing the first service-providing process.

The first service-providing process corresponds to the first service-information-providing process shown in Fig. 12. When this process is run by the CPU 50, it starts from step S750 as shown in Fig. 20.

Whether a provide-service request was input from the input device 60 is determined in step S750. If a service request was input (yes) control goes to step S752, but otherwise (no) step S750 repeats until a provide-service request is input.

In step S752 the provide-service request is sent to the device management server 100 and whether service information was received is determined in step S754. If service information was received (step S754 returns yes), control goes to step S756, but otherwise (no) step S754 repeats until the service information is received.

The received service information is then stored to the service information database 64 in step S756. A service list is then generated in step S758 based on the service name contained in the received service information, and the generated service list is presented on the display 61 in step S760. Control then goes to step S762.

In step S762 the user is requested to select the service to be received from the displayed service list and the service selection is then input from the input device 60. In step S764 the service Information for the selected service is then read from the service information database 64 and control goes to step S766.

In step S766, based on the device-to-device communication information contained in the read service information, communication between the network device 210 connected to the home gateway 200 and the related service device is relayed through the home gateway. The process then ends and control returns to the previous process.

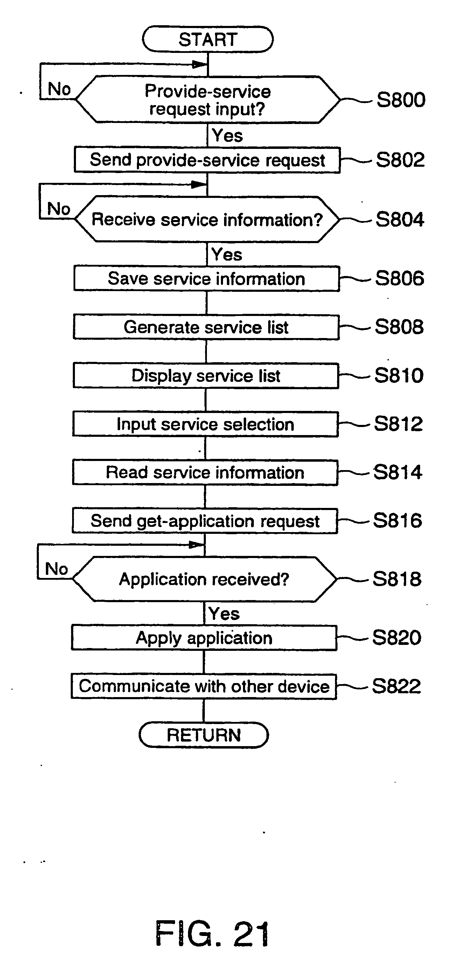

The second service-providing process is described in detail next with reference to Fig. 21. Fig. 21 is a flow chart showing the second service-providing process.

The second service-providing process corresponds to the second service-information-providing process shown in Fig. 13. When this process is run by the CPU 50, it starts from step S800 as shown in Fig. 21. This second service-providing process differs from the first service-providing process in that it applies an application to the home gateway 200.

Whether a provide-service request was input from the input device 60 is first determined in step S800. If a provide-service request was input (yes) control goes to step S802, otherwise (no) step S800 repeats until a provide-service request is input.

In step S802 the provide-service request is sent to the device management server 100. Whether service information was received is then determined in step S804. If service information was received (yes), control goes to step S806, otherwise (no) step S804 repeats until the service information is received.

The received service information is then stored to the service information database 64 in step S806 and control goes to step S808 where a service list is generated based on the service name contained in the received service information. The resulting service list is then presented on the display 61 in step S810 and control goes to step S812.

The user is then prompted to select the service to be provided from the displayed service list in step S812 and the user inputs the service selection from the input device 60. Service information for the selected service is then read from the service information database 64 in step S814, and control goes to step S816.

In step S816 a get-application request is then sent based on the application information contained in the read service information, and whether the application was received or not is determined in step S818. If the application was received (yes) control goes to step S820. If the application was not received (no), step S818 repeats until the application is received.

In step S820 the received application is applied to the home gateway 200 and control goes to step S822 where communication between the network device 210 connected to the home gateway 200 and the related service device is relayed based on the device-to-device communication information contained in the read service information. The process then ends and control returns to the previous process.

Operation of this embodiment of the invention is described next.

Registering user information in the device management server 100 is described first.

To register user information the user first inputs a user information registration request to the home gateway 200. The user information includes the user name, user password, and contact address information.

When a registration request and user information are input to the home gateway 200, the input user information and registration request are sent to the device management server 100 (steps S508 and S510).

When the device management server 100 receives the registration request and user information it generates a user ID and saves the received user information and resulting user ID as one user information record to the user information database 40, and returns the resulting user ID to the home gateway 200 that sent the registration request (steps S104 to S108).

When the home gateway 200 receives the user ID it saves the user ID with the input user information as one user information record to the user information database 62, and then returns a registration-completed report to the device management server 100 (steps S514, S516).

The user can thus register his own user information in the device management server 100.

Registering device information to the device management server 100 is described next.

To register device information the user first inputs the device information registration request to the home gateway 200.

When a device information registration request is input the home gateway 200 gets the device information from the network device 210 by communicating with the network device 210 connected to the home gateway 200 and prompts the user to select one of the network devices 210 connected to the home gateway 200 (steps S552, S554). When the user selects one of the network devices 210 the user ID is read from the user information database 62 and acquired as the administrator ID (step S556). The device information and registration request are then sent to the device management server 100 (steps S558, S560).

When the device management server 100 receives the registration request and device information it generates the device ID and saves the received device information and resulting device ID to the device information database 41 as one device information record, and sends the device ID to the home gateway 200 from which the registration request was received (steps S154 to S158).

When the home gateway 200 receives the device ID it saves the received device ID and acquired device information as one device information record to the device information database 63, and returns a registration-completed report to the device management server 100 (steps S564, S566).

The user can thus register device information about the user's own network devices 210 in the device management server 100.

Registering service information in the device management server 100 is described next.

To register service information the user first inputs a service information registration request to the home gateway 200 together with the service information. The service information includes the service name, device-to-device communication information, application information, and type of network device 210.

When the registration request and service information are input to the home gateway 200, the user ID is read from the user information database 62 and acquired as the administrator ID (step S610). The input service information and registration request are then sent to the device management server 100 (steps S612, S614).

When the device management server 100 receives the registration request and service information it generates a service ID and stores the received service information and resulting service ID as one service information record to the service information database 42 (steps S204, S206).

The user can thus define a specific service in the device management server 100.

Registering group information to the device management server 100 is described next.

To register group information the user first inputs a group information registration request to the home gateway 200, and inputs the group name and group password as group information.

When the registration request and group information are input, the home gateway 200 reads the user ID and user password from the user information database 62 and acquires the read user ID as the administrator ID (steps S656). The input group information and read user password are then sent with the registration request to the device management server 100 (step S658).

When the registration request, group information, and user password are received, the device management server 100 reads the user password corresponding to the administrator ID contained In the received group information from the user information database 40 and determines if the received user password matches the user password read from the database (steps S254, S256). If the user password matches, a group ID is generated and the received group information and resulting group ID are stored as one group information record to the group information database 43 (steps S258, S260).

The user can thus create groups on the device management server 100.

Enabling a user to participate In a group is described next.

For a user to participate in a group the user must first input a join-group request together with the group name and group password to the home gateway 200. It should be noted that the group name and group password must be acquired in advance from the group administrator.

When the join-group request, group name, and group password are input, the home gateway 200 reads the user ID and user password from the user information database 62, and then sends the input group name and group password, and the user ID and user password read from the database, as the join-group information together with a join-group request to the device management server 100 (steps S708 to S712).

When the join-group request and join-group information are received, a user ID is contained in the received join-group information. The device management server 100 therefore finds the user password for the user ID in the join-group information from the user information database 40, and determines if the user password In the join-group information matches the user password read from the database (steps S306, S308). The group password for the group name contained in the join-group information is then read from the group information database 43, and whether the group password in the join-group information matches the group password for the database is determined (steps S310, S312). If the passwords match in both determinations, the user ID in the join-group information is stored to the member list of the corresponding group information (steps S314).

A user can thus join a group on the device management server 100. The user can join a group created by another user or a group created by the user.

Adding a network device 210 to a group is described next.

For a network device 210 to join a group the user must first input a join-group request to the home gateway 200, and input the group name and group password. The group name and group password must be acquired in advance from the administrator that created the group.

When a join-group request, group name, and group password are input, the home gateway 200 prompts the user to select one of the network devices 210 connected to the home gateway 200 (steps S714). When the user selects one of the network devices 210, the device ID for the selected network device 210 is read from the device information database 63, and the input group name, group password, and retrieved device ID are sent as the join-group information with the join-group request to the device management server 100 (steps S716 to S720).

A device ID is contained in the join-group information received with the join-group request. The device management server 100 therefore reads the group password for the group name contained in the join-group information from the group information database 43, and determines if the group password in the join-group information and the group password from the database match (steps S316, S318). If the passwords match, the device ID in the join-group information is stored to the member list of the corresponding group Information (steps S320).

A user can therefore add a network device 210 managed by the user to a group on the device management server 100. The user can add the device to a group created by another user or to a group that the user created.

Using another network device 210 is described next.

To use another network device 210 the user first inputs a provide-service request to the home gateway 200. In order to access a service the user information, device information, service information, and group information must already be registered with the device management server 100.

When a provide-service request is input the home gateway 200 sends the provide-service request to the device management server 100 (step S752).

When a provide-service request is received the device management server 100 reads from the group information database 43 the group information for the group to which the user of the home gateway 200 originating the service request belongs(step S352). Based on the retrieved group information and the service information from service information database 42, network device 210 connected to home gateway 200 and a network device 210 linked thereto to provide the service are identified from among the network devices 210 belonging to users in the same group as the service-related devices (step S354). Service information for the service-related devices is then retrieved from the service information database 42 and the acquired service information is sent to the requesting home gateway 200 (steps S356, S358).

When service information is received by the home gateway 200, the received service information is stored to the service information database 64, a service list is generated based on the service names contained in the received service information, and the resulting service list is displayed (steps S756 to S760). When the user then selects the desired service, service information for the selected service is retrieved from the service information database 64, and, based on the device-to-device communication information contained in the retrieved service information, communication between the network device 210 connected to the home gateway 200 and service-related device is relayed through the home gateway (steps S762 to S766).

If, for example, a user in home A wants to send a document by fax to home B, the home A user simply selects a fax service using the network printer in home B. When the fax service is selected the network scanner in home A and the network printer in home B are connected as described above so that they can communicate with each other. Once the scanner and printer are communicatively connected and the document to be faxed is scanned with the scanner in home A, the document is sent by the network scanner to the network printer in home B through the home gateways 200 in home A and home B.

A case in which an application is needed to use another network device 210 is described next.

If an application is needed to use another network device 210, the user first inputs a provide-service request to the home gateway 200. As noted above, the user information, device information, service information, and group information must already be registered in the device management server 100 in order to send a provide-service request.

When a provide-service request is input, the home gateway 200 sends the request to the device management server 100 (steps S802).

When the service request is received, the device management server 100 reads the group information for the group to which the user of the home gateway 200 that sent the service request belongs from the group information database 43 (steps S402). Next, in step S404, based on the read group information and the service information from service information database 42, the network device 210 connected to the home gateway 200 and the network device 210 linked thereto to provide the service are identified from among the network devices 210 of the users in the same group as the service-related devices. The service information for the service-related devices is then read from the service information database 42 and sent to the requesting home gateway 200 (steps S406 and S408).

When the home gateway 200 receives the service information, it stores the received service information to the service information database 64, generates a service list based on the service names contained in the received service information, and displays the resulting service list (steps S806 to S810). When the user selects the desired service, the service information for the selected service is read from the service information database 64 and a get-application request is sent based on the application information contained in the read service information (step S814). Because the address of the device management server 100 is set in the application information at this time, the get-application request is sent to the device management server 100.

When the device management server 100 receives the get-application request, it reads the requested application from the application database 44 and returns the application to the home gateway 200 that requested it (steps S412, S414).

When the home gateway 200 receives the application it applies the application to the home gateway 200 (step S820). Based on the device-to-device communication information contained in the read service information, communication between the network device 210 connected to the home gateway 200 and the related service device is relayed(step S822).

With this embodiment of the invention, when a provide-service request is received, the device management server 100 sets the network device 210 connected to the home gateway 200 and the network device 210 linked thereto to provide a particular service as service-related devices based on the service information from the service information database 42. It then reads and sends the service information for the service-related devices from the service information database 42 to the home gateway 200. The home gateway 200 then sends a provide-service request to the device management server 100. When service information is received in response to this request, the home gateway 200 displays a service list based on the received service information, and, when a service is selected from the displayed service list, relays communication between the network device 210 connected to the home gateway 200 and the service-related device based on the device-to-device communication information contained in the received service information for the selected service.

As a result, because a network device 210 defined as a service device accessible by a provide-service request can be used by simply sending a provide-service request from the home gateway 200 to the device management server 100, network devices 210 can be shared relatively easily compared with the prior art. Furthermore, if usable network devices 210 are defined as service devices, the home gateway 200 does not need to query a particular network device 210 to determine if it is accessible for use, and even network devices 210 that are unknown to a user of the network device 210 can therefore be used.

Furthermore, when the home gateway 200 receives service information, it generates a service list based on the service names contained in the received service information.

Because a service list is thus generated based on service names by the home gateway 200, the user can easily know what services can be used.

Moreover, when the device management server 100 receives a provide-service request, it reads the group information for the group associated with the user of the home gateway 200 from the group information database 43, and, based on the read group information and service information retrieved from the service information database 42, defines the network device 210 connected to the home gateway 200 and the network device 210 linked thereto to provide the service from among the network devices 210 of the users in the same group as service-related devices.

By thus grouping users in groups and enabling only users in one group to use network devices 210 belonging to other users in the same group, the possibility of users that do not belong to the group using the network devices 210 can be reduced and security can be relatively improved.

Furthermore, when the device management server 100 in this embodiment receives a provide-service request it reads the group information for the group to which the network device 210 of the home gateway 200 belongs from the group information database 43, and, based on this read group information and the service information from the service information database 42, identifies the network device 210 connected to the home gateway 200 and the network device 210 linked thereto to provide the requested service as the service-related devices of the network devices 210 belonging to the same group.

Because the network devices 210 are grouped and only network devices 210 belonging to the same group can use other network devices 210 in the same group, the possibility of network devices 210 being used by a network device 210 that does not belong to the group can be reduced and security can be relatively improved.

Furthermore, when a desired service is selected from the service list, the home gateway 200 in this embodiment gets an application based on application information contained in the received service information for the selected service, and applies the acquired application to the home gateway 200.

The network devices 210 can therefore be easily shared even when a particular application is required to receive the service because the home gateway 200 is able to get and apply the required application based on the service information from the device management server 100.

Incidentally, the device management server 100 in the above embodiment corresponds to the device administration terminal described in the claims; the home gateway 200 corresponds to the gateway terminal in the claims; and the network device 210 corresponds to a device in any of claims. In addition, the service information database 42 corresponds to the service information storage means in the claims; the group information database 43 corresponds to the group information storage means in claims, and step S206 corresponds to the service information storage means in claim 8.

Furthermore, steps S354 and S404 correspond to the device identification step in claim 10; steps S356, S406 correspond to the service information reading step in claim 8; steps S358, S408 correspond to the service information transmission step in claim 8; steps S752, S802 correspond to the provide-service request transmission step in claim 8; steps S760. S810 correspond to the service list display step in claim 18; and steps S766, S822 corresponds to the communication relay step in claim 8.

Yet further, the service name referred to in the above embodiment corresponds to the service identification information in claim 2.

It will be further noted that the steps shown in the flow charts in Fig. 15 to Fig. 21 are performed by the home gateway 200 in the above embodiment, but the invention shall not be so limited. These steps could, for example, be performed by the network device 210. In this case the network device 210 could be connected directly to the Internet 199 without using a home gateway 200.

In this case network devices 210 defined for a service specified in a provide-service request can be used only by means of the network device 210 sending a provide-service request directly to the device management server 100, and the network devices 210 can therefore be easily shared compared with the prior art.

Furthermore, if a usable network device 210 is defined as a service, even network devices 210 that are unknown to the user of the network device 210 can be used without the network device 210 querying whether a network device 210 can be used.

Furthermore, the device management server 100 in the above embodiments corresponds to the device administration terminal in the claims, the network device 210 corresponds to a device in the claims; the service information database 42 corresponds to the service information storage means in the claims; step S206 corresponds to the service information storage step in claim 8; steps S354 and S404 correspond to the device identification step in claim 8; and steps S356 and S406 correspond to the service information reading step in claim 8.

Furthermore, in the above embodiment steps S358, S408 correspond to the service information transmission step in claim 8; steps S752, S802 correspond to the provide-service request transmission step in claim 8; steps S760, S810 correspond to the service list display step in claim 19; and steps S766. S822 correspond to the communication step in claim 8.

Yet further, service information registration is handled by the home gateway 200 in the above embodiment, but the invention shall not be so limited and any terminal connected to the internet 199 could store the service information. Because these services are more likely to be defined and provided by service vendors rather than the owner of a particular home gateway 200 or network device 210, the service information is preferably stored at a service vendor terminal rather than the home gateway 200.

Yet further, the application is adapted to the home gateway 200 in the above embodiment but the invention shall not be so limited and could be configured to adapt the application to the network device 210.

Deleting user information was also not particularly described in the above embodiment, but it will be obvious that user information can also be deleted. To delete user information the user inputs the user name and user password, and sends the user name and user password with a user information deletion request to the device management server 100. When the device management server 100 receives the user information deletion request with the user name and user password, it verifies the user based on the received user name and password, then deletes the user information for the indicated user, deletes all device information, service information, and group information for which the user is the designated administrator, and deletes the user and all network devices 210 for which the user is the administrator from the member lists of all groups to which the user belongs.

Deleting device information was also not particularly described in the above embodiment, but it will also be obvious that device information can be deleted. To delete device information the user inputs the user name, user password, and indicates the network device 210 for which device information is to be deleted, and then sends the input user name and password and network device 210 selection together with a device information deletion request to the device management server 100. When the device management server 100 receives the device information deletion request, user name, user password, and network device 210 selection, it verifies the user based on the received user name, user password, and network device 210 selection, then deletes the device information for the indicated network device 210, and deletes the network device 210 from the member lists of all groups to which the network device 210 belongs.

Deleting service information was also not particularly described in the above embodiment, but service information can also be deleted. To delete the service information the user inputs the user name, user password, and indicates the service for which service information is to be deleted, and then sends the input user name and password and service selection together with a service information deletion request to the device management server 100. When the device management server 100 receives the service information deletion request, user name, user password, and service selection, it verifies the user based on the received user name, user password, and service selection, and then deletes the service information for the indicated service.

Deleting group information was also not particularly described in the above embodiment, but group information can also be deleted. To delete group information the user inputs the user name, user password, group name and group password, and then sends the input user name and password and group name and password together with a group information deletion request to the device management server 100. When the device management server 100 receives the group information deletion request, user name, user password, group name and group password, it verifies the user and group based on the received user name, user password, group name and group password, verifies that the user is the group administrator, and then deletes the group information for the indicated group.

Removing a user from a group was also not specifically described in the above embodiment, but it will be obvious that a user can be removed from a group. To remove a user from a group, the user enters the user name, user password, group name, and group password, and sends the user name, user password, group name, and group password together with a remove-from-group request to the device management server 1.00. When the device management server 100 receives the remove-from-group request together with the user name, user password, group name, and group password, it verifies the user and group based on the received user name, user password, group name, and group password, and then removes the user from the member list of the indicated group.

Removing a network device 210 from a group was also not specifically described in the above embodiment, but it will be obvious that a network device 210 can be removed from a group. To remove a network device 210 from a group, the user enters the user name, user password, group name, group password, and network device 210 selection, and sends the user name, user password, group name, group password and network device 210 selection together with a remove-from-group request to the device management server 100. When the device management server 100 receives the remove-from-group request together with the user name, user password, group name, group password, and network device 210 selection, it verifies the user and group based on the received user name, user password, group name, group password, and network device 210 selection, and then removes the network device 210 from the member list of the indicated group.

A network scanner and a network printer are used as examples of network devices 210 in the above embodiment, but the invention shall obviously not be so limited. Other possible network devices include, for example, network-capable projectors, digital cameras, digital video cameras, personal computers, personal digital assistants (PDA), network storage devices, audio equipment, cell phones, PHS (Personal Handyphone System) handsets, watch-type PDAs, POS (point-of-sale) terminals, photocopiers, facsimile machines, telephones (including Internet Protocol (IP) telephones), exchange equipment, Network Control Units (NCU), and other network-capable devices and equipment.

Furthermore, the processes shown in the flow charts in Fig. 7 to Fig. 13 are described above as being run with a control program previously stored to ROM 32, but the invention shall not be so limited. For example, a program embodying the steps of these processes could be read from any desirable storage medium into RAM 34 and executed from there.

Likewise, the processes shown in the flow charts in Fig. 15 to Fig. 21 are described above as being run with a control program previously stored to ROM 52, but the invention shall not be so limited. For example, a program embodying the steps of these processes could be read from any desirable storage medium into RAM 54 and executed from there.

These storage media could be a semiconductor storage device such as RAM or ROM, a magnetic storage medium such as a floppy disk or hard disk, an optically-readable storage medium such as a CD, CDV, LD, or DVD, a magnetically-writable/optically-readable storage medium such as magnetooptical discs, or any other type of computer-readable storage media regardless of the reading method, including electronic, magnetic, optical, or other.

The device sharing system, device administration terminal, gateway terminal, device, terminal program and device program, and method for providing a device-sharing system are described in the above embodiment adapted to the Internet 199 as the network system. The invention shall not be so limited, however, and could be applied to an intranet enabling communication In the same way as the Internet 199. The invention will obviously not be limited to communication systems identical to the Internet 199, and can be applied to any type of network system.

Furthermore, in the present embodiment the device sharing system, device administration terminal, gateway terminal, device, terminal program and device program, and method for providing a device-sharing system define plural services achieved by linking at least two network devices 210 located in homes A to C as shown in Fig. 1. and provide services using these network devices 210 by connecting the required network devices 210 to communicate with each other in response to a received provide-service request. The invention shall not be so limited, however, and can be adapted within the scope of the present invention to various other scenarios. For example, the invention could be used to provide services using network devices 210 located In different parts of a company.

As described above a device-sharing system according to claim 1 can use devices defined for a specifically requested service by simply asserting a provide-service request, and sharing devices is thus easy compared with the prior art. Furthermore, if usable devices are defined as services, even devices unknown to the user of a device can be used without querying the device to determine whether it can be used.

Moreover, because a gateway terminal can use a device defined for a service relating to a provide-service request by simply sending a provide-service request to the device administration terminal with the device-sharing system described in claim 1 of the invention, devices can be shared easily when compared with the prior art.

Furthermore, if usable devices are defined as services even devices unknown to the user of a device can be used without the gateway terminal querying the device to determine whether it can be used.

The gateway terminal of the device-sharing system as described in claim 2 of the invention can display a service list based on service identification information, thereby making it easier to know what services can be used.

Furthermore, the device-sharing system described in claim 3 of the invention puts users into groups and enables only users in a given group to use devices belonging to users in the same group. The possibility of users not belonging to the group using those devices is thus reduced and security is relatively improved.

In addition, the device-sharing system described in claim 4 of the invention puts devices into groups and enables only devices in a given group to use devices belonging to the same group. The possibility of devices being used by devices not belonging to the same group is thus reduced and security is relatively improved.

The gateway terminal of the device-sharing system described in claim 5 of the invention gets and applies a required application based on service information received from a device administration terminal when a particular application is required to receive a particular provided service. Sharing devices is thus even easier.

With the device-sharing system described in claim 1 of the invention a device can use other devices designated for a service indicated by a provide-service request by simply sending a provide-service request to the device administration terminal. Devices can thus be shared more easily compared with the prior art.

Furthermore, if usable devices are defined as services, even devices unknown to the device-using side can be used without the device querying other devices to determine whether those devices can be used.

The device administration terminal described in claim 6 of the invention achieves the same effect as the device-sharing system of claim 1.

The terminal program described in claim 7 of the invention achieves the same effect as the device administration terminal of claim 6.

The method for providing a device-sharing service described in claim 8 of the invention achieves the same effect as the device-sharing system of claim 1.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A device-sharing system for managing service devices (210) of users having a plurality of gateway terminals (200) for communicatively connecting the service devices, wherein a plurality of services are achieved by linking at least two of these multiple service devices (210), the system comprising:
an administration terminal (100) for managing the service devices (210); and
a service information storage means (42) accessible by the administration terminal (100) and storing, for each service, service information relating to the service, the service information including device-to-device communication information required to establish said communication link between two or more service devices (210) used for a respective service; wherein the gateway terminals (200) and the administration terminal (100) are connected to a common communication network (199);
the administration terminal (100) is adapted to respond to a provide-service request originating from a gateway terminal (200) by
- identifying, based on service information from the service information storage means (42), as service-related service devices the service device of the request-originating gateway terminal (200), as a request-originating service device, and a service-providing service device to be linked thereto to provide the service,
- reading service information for the service-related service devices from the service information storage means (42), and
- sending the read service information to the request-originating gateway terminal (200); and
the request-originating gateway terminal (200) is adapted to respond to said service information received from the administration terminal (100) by
- displaying a service list based on the received service information, and
- relaying, in response to a service being selected from the displayed service list, communication between the request-originating service device and the service-providing service device based on device-to-device communication information contained in the received service information for the selected service.

2. The system of claim 1, wherein the service information contains service identification information for identifying each service, and
the gateway terminal (200) is adapted to display said service list based on the service identification information contained in the received service information.

3. The system of claim 1 or 2, further comprising a group information storage means (43) storing group information relating to groups to which multiple users can belong,
wherein the administration terminal (100) is responsive to a provide-service request to read, from the group information storage means (43), group information for the group to which the user of the request-originating gateway terminal (200) belongs, and to identify, based on the read group information and service information from the service information storage means (42), as service-related service devices from among service devices (210) belonging to users in the same group, a service device (210) of the request-originating gateway terminal (200) and the service device (210) linked thereto for the service.

4. The system of claim 1 or 2, further comprising a group information storage means (43) storing group information relating to groups to which multiple service devices (210) can belong;
wherein the administration terminal (100) is responsive to a provide-service request to read from the group information storage means (43) group information for the group to which the service device (210) of the request-originating gateway terminal (200) belongs, and to identify, based on the read group information and service information from the service information storage means (42), as service-related service devices from among service devices (210) belonging to the same group a service device (210) of the request-originating gateway terminal (200) and the service device (210) linked thereto for the service.

5. The system of any one of claims 1 to 4, wherein the service information includes application information denoting a location from which an application to be applied to a service device (210) or gateway terminal (200) used in the service can be acquired; and
the gateway terminals (200) are responsive to a service being selected from the service list, to acquire an application based on application information contained In the received service information for the selected service, and to apply the acquired application to the service device (210) or gateway terminal (200).

6. An administration terminal (100) for a system as described in any one of claims 1 to 5. comprising
means responsive to a provide-service request to identify as service-related service devices a service device of the request-originating gateway terminal (200) which sent the provide-service request and the service device related thereto to provide a requested service based on service information from the service information storage means (42), to read service information for the service-related service devices from the service information storage means (42), and to send the read service information to the request-originating gateway terminal (200).

7. A terminal program for execution by a computer to implement the administration terminal (100) as described in claim 6, the terminal program including instructions to execute a process for identifying, as service-related service devices (210), the request-originating service device and the service device related thereto to provide a requested service based on service information from the service information storage means (42) when a provide-service request is received, for reading service information for the service-related service devices from the service information storage means (42), and for sending the read service information to the request-originating gateway terminal (200).

8. A method of providing a device-sharing service for a system for managing service devices (210) of users having a plurality of gateway terminals (200) for communicatively connecting the service devices, wherein a plurality of services are achieved by linking at least two of these multiple service devices (210), and wherein the system comprises an administration terminal (100) for managing the service devices (210), and a service information storage means (42), the gateway terminals (200) and the administration terminal (100) being connected to a common communication network (199), the method comprising the steps of:
a) storing, for each service, in the service information storage means (42), service information including device-to-device communication information required to establish said communication link between service devices (210) used for the service;
b) causing a gateway terminal (200) to send, as request-originating gateway terminal (200), a provide-service request to the administration terminal (100);
c) causing the administration terminal (100) to respond to the provide-service request by
c1) identifying, based on service information from the service information storage means (42), as service-related service devices the service device of the request-originating gatway terminal and the service device related thereto to provide the requested service;
c2) reading the service information for the service-related service devices from the service information storage means (42); and
c3) sending the read service information to the request-originating gateway terminal (200); and
d) causing the request-originating gateway terminal (200) to respond to said service information sent in step c3) by
d1) displaying a service list based on the received service information;
d2) receiving input selecting a service from the displayed service list, and
d3) establishing a communication link between the request-originating service device and the service-related service device based on device-to-device communication information contained in the received service information for the selected service.

## Patentansprüche

1. System zur gemeinsamen Benutzung von Geräten zum Verwalten von Dienstgeräten (210) von Nutzern mit einer Mehrzahl Gateway-Endgeräte (200) zur kommunikativen Verbindung der Dienstgeräte, bei dem eine Mehrzahl von Diensten durch Verknüpfung von mindestens zwei dieser Mehrfach-Dienstgeräte (210) erreicht wird, wobei das System aufweist:
ein Verwaltungs-Endgerät (100) zum Verwalten der Dienstgeräte (210); und
ein Dienstinformations-Speichermittel (42), auf das durch das Verwaltungs-Endgerät (100) zugegriffen werden kann und das für jeden Dienst den Dienst betreffende Dienstinformation speichert, wobei die Dienstinformation Gerät-zu-Gerät-Kommunikationsinformation enthält, die zur Herstellung der Kommunikationsverbindung zwischen zwei oder mehr Dienstgeräten (210) erforderlich sind, die für einen jeweiligen Dienst benutzt werden; bei dem
die Gateway-Endgeräte (200) und das Verwaltungs-Endgerät (100) mit einem gemeinsamen Kommunikationsnetz (199) verbunden sind;
das Verwaltungs-Endgerät (100) angepasst ist, um auf eine von einem Gateway-Endgerät (200) kommende Dienstbereitstellungsanforderung zu reagieren durch
- Identifizieren, als dienstbezogene Dienstgeräte, auf der Basis von Dienstinformation vom Dienstinformations-Speichermittel (42) des Dienstgeräts des anfordernden Gateway-Endgeräts (200) als anforderndes Dienstgerät und eines damit zu verknüpfenden dienstbereitstellenden Dienstgeräts, das den Dienst bereitstellen soll,
- Auslesen von Dienstinformation für die dienstbezogenen Dienstgeräte aus dem Dienstinformations-Speichermittel (42), und
- Senden der ausgelesenen Dienstinformation zum anfordernden Gateway-Endgerät (200); und
das anfordernde Gateway-Endgerät (200) angepasst ist, um auf die vom Verwaltungs-Endgerät (100) empfangenen Dienstinformation zu reagieren durch
- Darstellen einer Dienstliste auf der Basis der empfangenen Dienstinformation, und
- Bewirken, als Reaktion auf einen aus der dargestellten Dienstliste ausgewählten Dienst, einer Kommunikation zwischen dem anfordernden Dienstgerät und dem dienstbereitstellenden Dienstgerät auf der Basis der in der empfangenen Dienstinformation für den gewählten Dienst enthaltenen Gerät-zu-Gerät-Kommunikationsinformation.

2. System nach Anspruch 1, bei dem die Dienstinformation Dienstidentifizierungsinformation zum Identifizieren jedes Dienstes enthält, und
das Gateway-Endgerät (200) angepasst ist, um die Dienstliste auf der Basis der in der empfangenen Dienstinformation enthaltenen Dienstidentifizierungsinformation darzustellen.

3. System nach Anspruch 1 oder 2, ferner aufweisend ein Gruppeninformations-Speichermittel (43), das Gruppeninformation über Gruppen speichert, zu denen eine Mehrzahl Nutzer gehören kann,
worin das Verwaltungs-Endgerät (100) auf eine Dienstbereitstellungsanforderung reagiert, um aus dem Gruppeninformations-Speichermittel (43) Gruppeninformation für die Gruppe auszulesen, zu der der Nutzer des anfordernden Gateway-Endgeräts (200) gehört, und um auf der Basis der aus dem Dienstinformations-Speichermittel (42) ausgelesenen Gruppeninformation und Dienstinformation unter den Dienstgeräten (210), die zu Nutzern in derselben Gruppe gehören, als dienstbezogene Dienstgeräte ein Dienstgerät (210) des anfordernden Gateway-Endgeräts (200) und das für den Dienst damit verknüpfte Dienstgerät (210) zu identifizieren.

4. System nach Anspruch 1 oder 2, ferner aufweisend ein Gruppeninformations-Speichermittel (43), das Gruppeninformation über Gruppen speichert, zu denen eine Mehrzahl Dienstgeräte (210) gehören kann,
bei dem das Verwaltungs-Endgerät (100) auf eine Dienstbereitstellungsanforderung reagiert, um aus dem Gruppeninformations-Speichermittel (43) Gruppeninformation für die Gruppe auszulesen, zu der das Dienstgerät (210) des anfordernden Gateway-Endgeräts (200) gehört, und um auf der Basis der ausgelesenen Gruppeninformation und Dienstinformation aus dem Dienstinformations-Speichermittel (42) unter den Dienstgeräten (210), die zu derselben Gruppe gehören, ein Dienstgerät (210) des anfordernden Gateway-Endgeräts (200) und das für den Dienst damit verknüpfte Dienstgerät (210), als dienstbezogene Dienstgeräte zu identifizieren.

5. System nach einem der Ansprüche 1 bis 4, bei dem die Dienstinformation Anwendungsinformation enthält, die einen Ort bezeichnet, von dem aus eine Anwendung, die bei einem bei dem Dienst verwendeten Dienstgerät (210) oder Gateway-Endgerät (200) angewendet werden soll, erhalten werden kann; und
die Gateway-Endgeräte (200) auf einen Dienst reagieren, der aus der Dienstliste ausgewählt wird, um eine Anwendung auf der Basis einer in der empfangenen Dienstinformation für den gewählten Dienst enthaltenen Anwendungsinformation zu erhalten und um die erhaltene Anwendung bei dem Dienstgerät (210) oder Gateway-Endgerät (200) anzuwenden.

6. Verwaltungs-Endgerät (100) für ein in einem der Ansprüche 1 bis 5 beschriebenen System, aufweisend
ein auf eine Dienstbereitstellungsanforderung reagierendes Mittel, um als dienstbezogene Dienstgeräte ein Dienstgerät des anfordernden Gateway-Endgeräts (200), das die Dienstbereitstellungsanforderung gesendet hat, und das damit verknüpfte Dienstgerät (210), das einen angeforderten Dienst bereitstellen soll, auf der Basis von Dienstinformation vom Dienstinformations-Speichermittel (42) zu identifizieren, um Dienstinformation für die dienstbezogenen Dienstgeräte aus dem Dienstinformations-Speichermittel (42) auszulesen und um die ausgelesene Dienstinformation zum anfordernden Gateway-Endgerät (200) zu senden.

7. Endgerätprogramm zur Ausführung durch einen Computer zur Implementierung des Verwaltungs-Endgeräts (100) wie in Anspruch 6 beschrieben, wobei das Endgerätprogramm Anweisungen zur Durchführung eines Prozesses enthält, der als dienstbezogenen Dienstgeräte (210) das anfordernde Dienstgerät und das damit zur Lieferung des angeforderten Dienstes verknüpfte Dienstgerät auf der Basis von Dienstinformation vom Dienstinformations-Speichermittel (42) identifiziert, wenn eine Dienstbereitstellungsanforderung empfangen wird, um Dienstinformation für die dienstbezogenen Dienstgeräte aus dem Dienstinformations-Speichermittel (42) auszulesen und die ausgelesene Dienstinformation zum anfordernden Gateway-Endgerät (200) zu senden.

8. Verfahren zur Bereitstellung eines Dienstes zur gemeinsamen Benutzung von Geräten für ein System, das Dienstgeräte (210) von Nutzern verwaltet, die eine Mehrzahl Gateway-Endgeräte (200) zur kommunikativen Verbindung der Dienstgeräte haben, bei dem eine Mehrzahl von Diensten durch Verknüpfung von mindestens zwei dieser Mehrzahl Dienstgeräte (210) erhalten wird, und bei dem das System ein Verwaltungs-Endgerät (100) zum Verwalten der Dienstgeräte (210) und ein Dienstinformations-Speichermittel (42) aufweist, wobei die Gateway-Endgeräte (200) und das Verwaltungs-Endgerät (100) mit einem gemeinsamen Kommunikationsnetz (199) verbunden sind, wobei das Verfahren die Schritte aufweist:
a) Speichern, für jeden Dienst, von Dienstinformation, die Gerät-zu-Gerät-Kommunikationsinformation enthält, die zur Herstellung der Kommunikationsverbindung zwischen den für den Dienst verwendeten Dienstgeräten (210) erforderlich sind, im Dienstinformations-Speichermittel (42);
b) Veranlassen eines Gateway-Endgeräts (200) als eines anfordernden Gateway-Endgeräts (200), eine Dienstbereitstellungsanforderung zum Verwaltungs-Endgerät (100) zu senden;
c) Veranlassen des Verwaltungs-Endgeräts (100), auf die Dienstbereitstellungsanforderung zu reagieren durch
c1) Identifizieren, auf der Basis der Dienstinformation aus dem Dienstinformations-Speichermittel (42), als dienstbezogene Dienstgeräte des Dienstgeräts des anfordernden Gateway-Endgeräts und des damit verknüpften Dienstgeräts, das den angeforderten Dienst bereitstellen soll,;
c2) Auslesen der Dienstinformation für die dienstbezogenen Dienstgeräte aus dem Dienstinformations-Speichermittel (42); und
c3) Senden der ausgelesenen Dienstinformation zum anfordernden Gateway-Endgerät (200);
und
d) Veranlassen des anfordernden Gateway-Endgeräts (200), auf die in Schritt c3) gesendete Dienstinformation zu reagieren durch
d1) Darstellen einer Dienstliste auf der Basis der empfangenen Dienstinformation;
d2) Empfang einer Eingabe, durch die ein Dienst aus der dargestellten Dienstliste ausgewählt wird, und
d3) Herstellung einer Kommunikationsverbindung zwischen dem anfordernden Dienstgerät und dem dienstbezogenen Dienstgerät auf der Basis von Gerät-zu-Gerät-Kommunikationsinformation, die in der empfangenen Dienstinformation für den ausgewählten Dienst enthalten ist.

## Revendications

1. Système de partage de dispositifs pour gérer des dispositifs (210) de service d'utilisateurs ayant une pluralité de terminaux (200) de passerelles pour connecter de façon à ce qu'ils communiquent les dispositifs de service,
dans lequel une pluralité de services sont obtenus en reliant au moins deux de ces multiples dispositifs (210) de service, le système comprenant:
un terminal (100) d'administration pour gérer les dispositifs (210) de service ; et
un moyen (42) de mémorisation d'informations de service accessible par le terminal (100) d'administration et mémorisant, pour chaque service, des informations de service liées au service, les informations de service comprenant les informations de communication de dispositif à dispositif exigées pour établir la liaison de communication entre deux ou plusieurs dispositifs (210) de service utilisés pour un service respectif ; dans lequel
les terminaux (200) de passerelles et le terminal (100) d'administration sont connectés à un réseau (199) de communication commun ;
le terminal (100) d'administration est apte à répondre à une demande de fourniture de service émanant d'un terminal (200) de passerelle, en
- identifiant, sur la base d'informations de service provenant du moyen (42) de mémorisation d'informations de service, en tant que dispositifs de service liés aux services, le dispositif de service du terminal (200) de passerelle émettant la demande, et en tant que dispositif de service émetteur de la demande, un dispositif fournisseur de service fournissant le service devant être relié à celui-ci pour fournir le service,
- lisant des informations de service pour les dispositifs de service liés au service à partir du moyen (42) de mémorisation d'informations de service, et
- envoyant les informations de service lues au terminal (200) de passerelle émetteur de la demande ; et
le terminal (200) de passerelle émettant la demande est apte à répondre aux informations de service reçues du terminal (100) d'administration en:
- affichant une liste de services basée sur les informations de service reçues, et
- retransmettant, en réponse à la sélection d'un service dans la liste de services affichée, les communications entre le dispositif de service émetteur de la demande et le dispositif de service fournisseur de service sur la base d'informations de communication de dispositif à dispositif contenues dans les informations de service reçues pour le service sélectionné.

2. Système suivant la revendication 1, dans lequel les informations de service contiennent des informations d'identification de service pour identifier chaque service, et
le terminal (200) de passerelle est apte à afficher la liste de services sur la base des informations d'identification de service contenues dans les informations de service reçues.

3. Système suivant la revendication 1 ou 2, comprenant en outre un moyen (43) de mémorisation d'informations de groupes mémorisant des informations de groupes liées à des groupes auxquels peuvent appartenir de multiples utilisateurs,
dans lequel le terminal (100) d'administration est sensible à une demande de fourniture de service pour lire, à partir du moyen (43) de mémorisation d'informations de groupes, les informations de groupes pour le groupe auquel appartient l'utilisateur du terminal (200) de passerelle émetteur de la demande, et pour identifier, sur la base des informations de groupes et des informations de service lues à partir du moyen (42) de mémorisation d'informations de service, en tant que dispositifs de service liés aux services parmi des dispositifs (210) de service appartenant à des utilisateurs du même groupe, un dispositif (210) de service du terminal (200) de passerelle émetteur de la demande et le dispositif (210) de service qui lui est relié pour le service.

4. Système suivant la revendication 1 ou 2, comprenant en outre un moyen (43) de mémorisation d'informations de groupes mémorisant des informations de groupes liées à des groupes auxquels peuvent appartenir de multiples dispositifs (210) de service ;
dans lequel le terminal (100) d'administration est sensible à une demande de fourniture de service pour lire, à partir du moyen (43) de mémorisation d'informations de groupes, des informations de groupes pour le groupe auquel appartient le dispositif (210) de service du terminal (200) de passerelle émetteur de la demande, et pour identifier, sur la base des informations de groupes et des informations de service lues à partir du moyen (42) de mémorisation d'informations de service, en tant que dispositifs de service liés aux services parmi des dispositifs (210) de service appartenant au même groupe, un dispositif (210) de service du terminal (200) de passerelle émetteur de la demande et le dispositif (210) de service qui lui est relié pour le service.

5. Système suivant l'une quelconque des revendications 1 à 4, dans lequel les informations de service comprennent des informations d'application désignant un emplacement à partir duquel une application devant être appliquée à un dispositif (210) de service ou à un terminal (200) de passerelle utilisé dans le service, peut être acquise ; et
les terminaux (200) de passerelles sont sensibles à la sélection d'un service dans la liste, pour acquérir une application sur la base d'informations d'applications contenues dans les informations de service reçues pour le service sélectionné, et pour appliquer l'application acquise au dispositif (210) de service ou au terminal (200) de passerelle.

6. Terminal (100) d'administration pour un système tel que décrit dans l'une quelconque des revendications 1 à 5, comprenant:
un moyen sensible à une demande de fourniture de service pour identifier en tant que dispositifs de service liés aux services, un dispositif de service du terminal (200) de passerelle émetteur de la demande qui a envoyé la demande de fourniture de service, et le dispositif de service qui lui est lié pour fournir un service demandé sur la base d'informations de service provenant du moyen (42) de stockage d'informations de service, pour lire des informations de service concernant les dispositifs de service liés au service à partir du moyen (42) de mémorisation d'informations de service, et pour envoyer les informations de service lues au terminal (200) de passerelle émetteur de la demande.

7. Programme de terminal destiné à être exécuté par un ordinateur pour mettre en oeuvre le terminal (100) d'administration suivant la revendication 6, le programme de terminal comportant des instructions destinées à exécuter un processus d'identification, en tant que dispositifs (210) de service liés au service, le dispositif de service émetteur de la demande et le dispositif de service qui lui est lié pour fournir un service demandé sur la base d'informations de service provenant du moyen (42) de mémorisation d'informations de service, lorsqu'une demande de fourniture de service est reçue, pour lire des informations de service destinées aux dispositifs de service liés au service à partir du moyen (42) de mémorisation d'informations de service, et pour envoyer des informations de service lues au terminal (200) de passerelle émetteur de la demande.

8. Procédé de fourniture d'un service de partage de dispositifs pour un système destiné à gérer des dispositifs (210) de services d'utilisateurs ayant une pluralité de terminaux (200) de passerelles pour connecter de façon à ce qu'ils communiquent les dispositifs de service, dans lequel une pluralité de services sont obtenus en reliant au moins deux de ces multiples dispositifs (210) de service, et dans lequel le système comprend un terminal (100) d'administration pour gérer les dispositifs (210) de service, et un moyen (42) de mémorisation d'informations de service, les terminaux (200) de passerelles et le terminal (100) d'administration étant connectés à un réseau (199) de communication commun, le procédé comprenant les étapes consistant à :
a) mémoriser, pour chaque service, dans le moyen (42) de mémorisation d'informations de service, des informations de service comprenant des informations de communication de dispositif à dispositif exigées pour établir ladite liaison de communication entre des dispositifs (210) de service utilisés pour le service ;
b) faire en sorte qu'un terminal (200) de passerelle envoie, en tant que terminal (200) de passerelle émetteur de la demande, une demande de fourniture de service au terminal (100) d'administration ;
c) faire en sorte que le terminal (100) d'administration réponde à la demande de fourniture de service en
c1) identifiant, sur la base d'informations de service provenant du moyen (42) de mémorisation d'informations de service, en tant que dispositifs de service liés au service, le dispositif de service du terminal de passerelle émetteur de la demande et le dispositif de service qui lui est lié pour fournir le service demandé ;
c2) lisant les informations de service destinées aux dispositifs de service liés au service à partir du moyen (42) de mémorisation d'informations de service, et
c3) envoyant les informations de service lues au terminal (200) de passerelle émetteur de la demande ; et
d) faire en sorte que le terminal (200) de passerelle émetteur de la demande réponde aux informations de service envoyées à l'étape c3) en
d1) affichant une liste de services basée sur les informations de service reçues;
d2) recevant une entrée sélectionnant un service dans la liste de services affichée ; et
d3) établissant une liaison de communication entre le dispositif de service émetteur de la demande et le dispositif de service lié au service sur la base d'informations de communication de dispositif à dispositif contenues dans les informations de service reçues pour le service sélectionné.
